Europäisches Patentamt

European Patent Office

Office européen des brevets

(19)

(11) Publication number: **0 029 626**
**B1**

(12) # EUROPEAN PATENT SPECIFICATION

(45) Date of publication of patent specification: **16.03.83**

(51) Int. Cl.³: **A 01 N 25/04,**
**A 01 N 53/00**

(21) Application number: **80201061.1**

(22) Date of filing: **06.11.80**

(54) **Water-based pesticidal suspension and process for its manufacture.**

(30) Priority: **23.11.79 GB 7940569**

(43) Date of publication of application:
**03.06.81 Bulletin 81/22**

(45) Publication of the grant of the patent:
**16.03.83 Bulletin 83/11**

(84) Designated Contracting States:
**DE FR GB IT NL**

(56) References cited:
**FR - A - 2 206 049**
**US - A - 3 157 486**

(73) Proprietor: **SHELL INTERNATIONALE RESEARCH**
**MAATSCHAPPIJ B.V.**
**Carel van Bylandtlaan 30**
**NL-2596 HR Den Haag (NL)**

(72) Inventor: **Ackerman, Leon**
**135 Lange Avenue**
**Florida Glen 1710 (ZA)**
Inventor: **Naidoo, Premnathan**
**118 Flamboyant Drive**
**Isipingo Hills 4110 (ZA)**

(74) Representative: **Rogers, Roy Charles et al,**
**4 York Road**
**London SE1 7NA (GB)**

Courier Press, Leamington Spa, England

# 0 029 626

Water-based pesticidal suspension and process for its manufacture

This invention relates to a water-based pesticidal suspension and to a process for the manufacture of this suspension.

Although pesticides in the form of emulsifiable concentrates are preferred by the user because they are easy to handle, measure and mix under field conditions they suffer from the disadvantage of being based on an organic, normally-aromatic, solvent system and thus attract criticism on toxicological and environmental grounds. This problem can be overcome by formulating the pesticide as a water-based suspension commonly known as a "suspension concentrate" formulation which consists of finely-divided water-insoluble normally-solid pesticides suspended in water.

Many pyrethroid insecticides are liquid or semi-solid materials, and therefore not susceptible to formulation as a suspension concentrate. However, the Applicant has developed a water-based suspension for pyrethroid insecticides which possesses all the advantages of conventional suspension concentrates and also possesses improved pesticidal properties.

Accordingly, the present invention provides a water-based pesticidal suspension comprising

(a) a liquid or semi-solid pyrethroid insecticide which is distributed over and/or adsorbed upon a finely divided solid carrier in a weight ratio of carrier to pyrethroid insecticide in the range 1:1 to 100:1;

(b) water in which is suspended the carrier having the pyrethroid insecticide distributed thereover and/or adsorbed thereon;

(c) a dispersing agent of the non-ionic and/or anionic type to disperse the finely-divided solid carrier in the water, the dispersing agent being present in a concentration range of 5 to 200 grammes per litre of the suspension; and

(d) a structuring agent in a concentration range of 0.1 to 30.0 grammes per litre of suspension to stabilise the suspension and substantially prevent settling out of the finely-divided carrier;

and wherein the pyrethroid insecticide is present in a concentration of 1 to 250 grammes per litre of suspension.

The liquid or semi-solid pyrethroid insecticide is preferably a 3-phenoxybenzyl ester, and alpha-cyano-3-phenoxybenzyl ester, an alpha-cyano-2-phenoxypyridin-6-ylmethyl ester, or an alpha-cyano-3-(4-halophenoxy)benzyl ester of a substituted cyclopropane acid, a substituted phenylacetic acid or a substituted phenylaminoacetic acid, for example

(a) 3-phenoxy 2-(2,2-dichlorovinyl)-3,3-dimethylcyclopropanecarboxylate;

(b) alpha-cyano-3-phenoxybenzyl 2-(2,2-dichlorovinyl)-3,3-dimethylcyclopropanecarboxylate;

(c) alpha-cyano-3-phenoxybenzyl 2-(2,2-dibromovinyl)-3,3-dimethylcyclopropanecarboxylate;

(d) alpha-cyano-3-phenoxybenzyl 2,2,3,3-tetramethylcyclopropanecarboxylate;

(e) alpha-cyano-3-phenoxybenzyl alpha-isopropyl-4-chlorophenylacetate;

(f) alpha-cyano-3-phenoxybenzyl alpha-isopropyl-4-difluoromethoxyphenylacetate;

(g) alpha-cyano-3-phenoxybenzyl spiro 2-(1-indene)-3,3-dimethylcyclopropanecarboxylate;

(h) alpha - cyano - 3 - phenoxybenzyl alpha - (2 - chloro - 4 - trifluoromethylphenylamino)-alpha-isopropylacetate;

(i) alpha - cyano - 2 - phenoxypyridin - 2 - ylmethyl 2 - (2,2 - dichlorovinyl) - 3,3 - dimethylcyclopropanecarboxylate;

(j) alpha - cyano - 3 - (4 - fluorophenoxy)benzyl 2 - (2,2 - dichlorovinyl) - 3,3 - dimethylcyclopropanecarboxylate;

(k) alpha - cyano - 3 - phenoxybenzyl 2 - (1,2 - dibromo - 2,2 - dichloroethyl) - 3,3 - dimethylcyclopropanecarboxylate;

(l) alpha - cyano - 3 - phenoxybenzyl 2 - (2 - trifluoroethyl - 2 - chlorovinyl) - 3,3 - dimethylcyclopropanecarboxylate.

The pyrethroids listed above possess asymmetric carbon atoms and thus exist in a number of stereoisomeric forms. The present invention is concerned with the formulation of those pyrethroids including those single isomers, or isomer mixtures which are liquids or semi-solids at ambient temperatures. Thus the preferred pyrethroids, pyrethroid isomers, or pyrethroid isomer mixtures have a melting point below 80°C suitably below 70°C.

The weight ratio of carrier to pyrethroid insecticide preferably lies in the range 1:1 to 50:1 more preferably in the range 1:1 to 20:1.

The finely divided carrier can be any conventional carrier used in pesticidal formulations on to which or over which the pyrethroid insecticide can be adsorbed or distributed, for example a clay of the montmorillonite, kaolinite, attapulgite, bentonite or talc groups, diatomaceous earths, or calcium carbonate. The volume median diameter of the carrier in the suspension is preferably in the range 0.5 to 25 micrometers, more preferably in the range 1 to 10 micrometers for example 2 to 3 micrometers.

The dispersing agent may be one or a combination of the following surfactants:—

(A) the alkali metal or alkaline earth metal salts of sulphuric acid esters or sulphonic acids, preferably containing at least 10 carbon atoms in the molecule. Thus for example long chain alkyl

2

**0 029 626**

sulphates such as sodium lauryl sulphate or aliphatic or aromatic sulphonates such as sulphonated castor oil or various alkyl aryl sulphonates having at least 10 carbon atoms in the alkyl group such as for example sodium dodecyl benzene sulphonate, Sipex® N.S.L., Tensiofix K.L. and Empicol L.Z. Calcium or sodium salts of lignin sulphonic acid, e.g. VANISPERSE L.B. are other examples.

(B) polyalkylene oxide polymers, e.g. the "Pluronics"®, high molecular weight alkyl polyglycol ethers or analogous thioethers such as decyl, dodecyl, and tetradecyl polyglycol ethers and thioethers containing from 25—75 carbon atoms.

(C) Condensation products of polyalkylene oxides with (i) aromatic nuclei (e.g. alkyl phenols), such as Triton® X—100, Nonidet P. 40; (ii) long-chain aliphatic alcohols, e.g. Nonidet A—10 and Nonidet A—50; (iii) castor oil and similar natural products, e.g. Tensiofia D120 and Atlas G—1285.

(D) polymethacrylates e.g. Orotan 731.

(E) a sulphonated naphthalene/formaldehyde copolymer, e.g. Stepantan A.

(F) phosphate esters, e.g. GAFAC®.

The dispersing agent employed in any one formulation may consist of more than one surfactant and often two surfactants are employed in order to achieve optimum results. The dispersing agent is preferably present at a concentration in the range 10 to 50 grammes per litre of suspension.

The structuring agent for stabilising the suspension and substantially preventing settling out of the finely-divided carrier is preferably a polysaccharide e.g. Rhodopol or Kelzan®, an alginate e.g. Manucol®, a cellulose derivative e.g. Natrosol®, a carbohydrate gum e.g. gum arabic, or a soluble polymer such as polyvinyl alcohol. Clays such as bentonites and silicates may also be used. Preferably the structuring agent is a water-soluble polymeric material which forms a network in which the finely divided carrier is entrained, a network which must be weak enough to break under the effect of pouring or shaking so that the formulation can be handled quite readily and capable of reforming to prevent the carrier particles settling on standing. The structuring agent is preferably present in a concentration of 1 to 10 grammes per litre of suspension.

It has been observed that, although it is not essential, it is generally preferable to bring the pH of the suspension to a value in the range pH3 to pH7; generally speaking pH's of about 4 provide the best results.

In commercial formulations the following additional ingredients may also be added.

(i) Anti-freeze Agent

In cold climates freezing of the suspension will in most cases destroy the suspension and thus destroy the efficacy of the pesticidal action. Anti-freeze agents such as monoethylene glycol or urea may therefore be added to improve the shelf life of the suspension.

(ii) Bactericide

If organic material is present in the suspension then in order to prevent bacterial degradation a bactericide is necessary, for example formaldehyde.

(iii) Defoamer

According to the surfactants employed in the suspension and to its method of manufacture the degree of foaming may be sufficiently great to cause problems in packaging and dilution. Thus defoamers such as silicones, solvents and esters may be employed to minimise foaming.

The water-based suspension according to the invention differs from conventional suspension concentrates by virtue of its ability to suspend in water liquid or semi-solid pesticides and, as has been explained above, this is achieved by adsorbing and/or distributing the pesticide onto a carrier and then suspending in water the carrier bearing the pesticide. The present invention therefore also relates to a process for the manufacture of a water-based pesticidal suspension which comprises

(a) homogenising the pyrethroid insecticide with an emulsifying agent where the weight ratio of insecticide to emulsifying agent is in the range 1:1 to 10:1, preferably in the range 1:1 to 5:1;

(b) forming a slurry of the homogenised mixture of the pyrethroid insecticide and the emulsifying agent together with the carrier, water and the dispersing agent; and

(c) forming a structured suspension by adding to the slurry a structuring agent.

The emulsifying agent used in the first step of the process may be any one of the surfactants employed as the dispersing agent but is preferably a surfactant listed under paragraph (C) above and is suitably a condensation product of an alkylene oxide and an alkyl phenol. Homogenisation can be achieved by a stirring or agitational action, for example in a suitable feed vessel provided with stirring or agitational facilities.

The carrier may be in the finely divided form required by the suspension according to the invention but is preferably added in its natural state and the required particle size obtained by wet-milling the slurry obtained from the second step before the structuring agent is added. Thus according to a

3

# 0 029 626

preferred aspect of the invention the water-based pesticidal suspension is manufactured by a process which comprises

(a) homogenising the pyrethroid insecticide with an emulsifying agent where the weight ratio of insecticide to emulsifying agent is in the range 1:1 to 10:1, preferably in the range 1:1 to 5:1;

(b) forming a slurry of the homogenised mixture of the pyrethroid insecticide and the emulsifying agent together with the carrier, water and the dispersing agent;

(c) wet-milling the slurry to produce a suspension of the required particle size; and

(d) forming a structured suspension by adding to the wet-milled slurry a structuring agent.

The wet-milling of the slurry may be carried out in a wet-grinding mill, for example a perl mill, a ball mill or a glass-bead mill. Milling times will depend on the initial particle size of the carrier, the volume of the formulation being milled and the capacity of the particular milling apparatus employed. The temperature of the milling stage should not be allowed to rise too high and in general should be kept below 60°C, suitably below 40°C.

In general it is preferred to add the structuring agent to the milled slurry in the form of a solution in water together with, if desired, the anti-freeze agent of the bactericide. Conveniently the milled slurry is lead to a mixing vessel into which is added the structuring agent solution and the combined contents stirred or agitated together to form the desired stabilised pesticidal suspension.

If necessary a defoamer may be added during the process according to the invention, suitably to the slurry or during its formation.

The pesticidal suspension according to the invention has been found to be a very useful formulation in agrochemical practice and in the case of cypermethrin (alpha - cyano - 3 - phenoxybenzyl 2 - (2,2 - dichlorovinyl) - 3,3 - dimethylcyclopropanecarboxylate) very good results have been achieved in that better insect control is obtainable than with conventional formulations of the emulsifiable concentrate or wettable powder type.

The invention is further illustrated by the following Examples.

## Example 1

A water-based suspension containing the following ingredients in the indicated proportions was prepared.

|  |  | Kg |
|---|---|---|
| Pyrethroid insecticide | cypermethrin[1] | 84.9 |
| Carrier | kaolinite clay | 175.4 |
| Dispersing agent | Pluronic F—127[2]® | 14.9 |
|  | Stepantan A[3] | 4.4 |
| Structuring agent | Kelzan D[4]® | 2.2 |
| Emulsifying agent | Nonidet P—40[5] | 43.9 |
| Defoamer | Bevaloid 692M | 0.9 |
| Anti-freeze agent | monoethylene glycol | 65.8 |
| Bactericide | formalin 40% | 2.2 |
| Water |  | 605.4 |

[1]cypermethrin is the common name for the compound alpha-cyano-3-phenoxybenzyl 2 - (2,2 - dichlorovinyl) - 3,3 - dimethylcyclopropanecarboxylate
[2]Pluronic F—127 is a copolymer of ethylene and propylene oxide
[3]Stepantan A is a naphthalene/formaldehyde copolymer
[4]Kelzan D is xanthan gum polysaccharide
[5]Nonidet P—40 is an alkyl phenol/alkylene oxide condensate

The emulsifying agent and the insecticide were homogenised by feeding them into a vessel provided with stirring facilities. Then, water (507.2 kg), the dispersing agent (consisting of the two surfactants) and part of the defoamer were added to the homogenised blend and stirring continued for

4

approximately 10 minutes until the total mixture was homogeneous. The carrier was then added to the mixture and stirring continued for a further 15 minutes. The remainder of the defoamer was added and incorporated into the slurry.

The slurry was then fed to a wet grinding mill maintained at a temperature below 40°C and milling effected until the volume median diameter of the carrier was less than 3.0 micrometers.

The anti-freeze agent, the structuring agent, the bactericide and water (98.2 kg) were fed to a second vessel provided with stirring facilities and stirred to produce a homogeneous "gel" phase.

The milled slurry was fed to a final blending vessel provided with stirring facilities and the "gel" phase blended with it to form a stabilised pesticidal suspension.

### Example 2

Tests on Activity of Pesticidal Suspension

The method of testing was based on SABS (South African Bureau of Standards Method 583), whereby cement and painted wood panels were sprayed to the point of run-off with different formulations at various strengths. Flies (*Musca domestica*) were then exposed to the panels for a set period of time, then transferred to clean observation containers containing food, incubated and observed at set intervals. Four replicates were made for each strength tested and for the control insecticide as well as the untreated control.

Re-exposure tests were done in the same manner at 24 hours, 1 week, 2 weeks, 1 month and two months after treating the panels. When less than 75% mortality occurred the particular insecticide was discarded.

The following formulations were tested at the strengths indicated, formulation B being the formulation according to the invention and formulations A and C being included for comparative purposes.

| Cypermethrin Formulations | Application |
|---|---|
| A. Emulsifiable Concentrate 200 g/l | 0,05% |
| | 0,1% |
| B. Water-based Suspension 90 g/l | 0,05% |
| | 0,1% |
| | 0,15% |
| C. Wettable Powder 50g/kg | 0,05% |
| | 0,1% |
| | 0,15% |

The results are given in the following tables in which the action of the various formulations on the two surfaces are summarised.

The results of each and every control are not shown in the tables. Control mortality was in most cases 0% but varied between 0 and 6%.

### TABLE I

Comparison of Action of various formulations of cypermethrin against Musca domestica on cement

| Formulation | % Active ingredient applied | % Mortality Total of 4 replicates | | | | |
|---|---|---|---|---|---|---|
| | | 24 h | 1 w | 2 w | 1 m | 2 m |
| A | 0,05 | 45,0 | — | — | — | — |
| | 0,10 | 95,0 | 65,0 | — | — | — |
| | 0,15 | 95,8 | 82,5 | 3,3 | — | — |
| B | 0,05 | 100,0 | 100,0 | 100,0 | 100,0 | 100,0 |
| | 0,10 | 100,0 | 100,0 | 100,0 | 100,0 | 100,0 |
| | 0,15 | 100,0 | 100,0 | 100,0 | 100,0 | 100,0 |
| C | 0,05 | 100,0 | 100,0 | 86,6 | — | |
| | 0,10 | 100,0 | 100,0 | 100,0 | — | |
| | 0,15 | 100,0 | 100,0 | 100,0 | — | |

TABLE II

Comparison of action of various formulations of cypermethrin against Musca domestica
on painted wood*

| Formulation | % Active ingredient applied | % Mortality Total of 4 replicates | | | | |
|---|---|---|---|---|---|---|
| | | 24 h | 1 w | 2 w | 1 m | 2 m |
| A | 0,05 | 18,3 | 0 | — | — | — |
| | 0,10 | 38,3 | 2,5 | — | — | — |
| | 0,15 | 32,4 | 0,8 | — | — | — |
| B | 0,05 | 100,0 | 100,0 | 93,9 | 100,0 | 100,0 |
| | 0,10 | 100,0 | 100,0 | 100,0 | 100,0 | 100,0 |
| | 0,15 | 100,0 | 100,0 | 95,7 | 100,0 | 100,0 |
| C | 0,05 | 64,9 | 47,4 | — | — | — |
| | 0,10 | 97,3 | 71,5 | — | — | — |
| | 0,15 | 95,7 | 84,0 | 71,5 | — | — |

* PVA painted Obeche Wood

It will be seen from the results in Table I and II that Formulation B, the water-based suspension gives consistently better insecticidal protection to the surfaces tested than the comparative formulations A and C.

**Claims**

1. A water-based pesticidal suspension characterised in that it includes
(a) a liquid or semi-solid pyrethroid insecticide which is distributed over and/or adsorbed upon a finely-divided solid carrier in a weight ratio of carrier to pyrethroid insecticide in the range 1:1 to 100:1;
(b) water in which is suspended the carrier having the pyrethroid insecticide distributed thereover and/or adsorbed thereon;
(c) a dispersing agent of the non-ionic and/or anionic type to disperse the finely-divided solid carrier in the water, the dispersing agent being present in a concentration range of 5 to 200 grammes per litre of the suspension; and
(d) a structuring agent in a concentration range of 0.1 to 30.0 grammes per litre of suspension to stabilise the suspension and substantially prevent settling out of the finely-divided carrier;
and wherein the pyrethroid insecticide is present in a concentration of 1 to 250 grammes per litre of suspension.

2. A suspension according to Claim 1 characterised in that the liquid or semi-solid pyrethroid insecticide is a 3-phenoxybenzyl ester, an alpha - cyano - 3 - phenoxybenzyl ester, an alpha - cyano - 2 - phenoxypyridin - 6 - ylmethyl ester, or an alpha - cyano - 3 - (4 - halophenoxy) - benzyl ester of a substituted cyclopropane acid, a substituted phenylacetic acid or a substituted phenylaminoacetic acid.

3. A suspension according to Claims 1 or 2 characterised in that the weight ratio of carrier to pyrethroid insecticide is in the range 1:1 to 50:1.

4. A suspension according to any one of the preceding claims characterised in that the volume median diameter of the carrier is in the range 0.5 to 24 micrometers.

5. A suspension according to any one of the preceding claims characterised in that the dispersing agent is present at a concentration in the range 10 to 50 grammes per litre of suspension.

6. A suspension according to any one of the preceding claims characterised in that the structuring agent is a water-soluble polymeric material.

7. A suspension according to any one of the preceding claims characterised in that the structuring agent is present at a concentration in the range 1 to 10 grammes per litre of suspension.

8. A process for manufacturing a water-based pesticidal suspension characterised in that
(a) the pyrethroid insecticide is homogenised with an emulsifying agent where the weight ratio of insecticide to emulsifying agent is in the range 1:1 to 10:1;
(b) a slurry of the homogenised mixture of the pyrethroid insecticide and the emulsifying agent is formed together with the carrier, water and the dispersing agent; and

(c) a structured suspension is formed by adding to the slurry a structuring agent.

9. A process for manufacturing a water-based pesticidal suspension characterised in that

(a) the pyrethroid insecticide is homogenised with an emulsifying agent where the weight ratio of insecticide to emulsifying agent is in the range 1:1 to 10:1;

(b) a slurry of the homogenised mixture of the pyrethroid insecticide and the emulsifying agent is formed together with the carrier, water and the dispersing agent;

(c) the slurry is well-milled to produce a suspension of the required particle size; and

(d) a structured suspension is formed by adding to the wet-milled slurry a structuring agent.

10. A process according to Claim 9 characterised in that the wet-milling is carried out at a temperature below 60°C.

11. A process according to any one of Claims 8 to 10 characterised in that the structuring agent is added as a solution in water optionally together with an anti-freeze agent, and or a bactericide.

12. A process according to any one of Claims 8 to 11 characterised in that a defoamer is added to the slurry or during its formation.

## Patentansprüche

1. Pestizide Suspension auf der Grundlage von Wasser, dadurcy gekennzeichnet, daß sie umfaßt

(a) ein flüssiges oder halbfestes Pyrethroid-Insektizid, das auf einem feinteiligen, festen Träger verteilt und/oder an diesen adsorbiert ist, in einem Gewichtsverhältnis von Träger zu Pyrethroid-Insektizid im Bereich von 1:1 bis 100:1;

(b) Wasser, in dem der Träger, auf dem das Pyrethroid-Insektizid verteilt und/oder an den es absorbiert ist, suspendiert ist;

(c) ein nicht-ionisches und/oder anionisches Dispergiermittel, um den feinteiligen, festen Träger in dem Wasser zu dispergieren, wobei das Dispergiermittel in einer Konzentration im Bereich von 5 bis 200 g/l bezogen auf die Suspension vorhanden ist, und

(d) ein Struktur-gebendes Mittel in einer Konzentration von 0,1 bis 30 g/l, bezogen auf die Suspension, zur Stabilisierung der Suspension und um im wesentlichen ein Absetzen des feinteiligen Trägers zu vermeiden;

wobei das Pyrethroid-Insektizide in einer Konzentration von 1 bis 250 g/l in der Suspension vorhanden ist.

2. Suspension nach Anspruch 1, dadurch gekennzeichnet, daß das flüssige oder halbfeste Pyrethroid-Insektizid ein 3-Phenoxybenzylester, ein $\alpha$ - Cyano - 3 - phenoxybenzylester, ein $\alpha$ - Cyano - 2 - phenoxypyridin - 6 - ylmethylester oder ein $\alpha$ – Cyano - 3 - (4 - halogenphenoxy) - benzylester einer substituierten Cyclopropansäure, einer substituierten Phenylessigsäure oder einer substituierten Phenylaminoessigsäure ist.

3. Suspension nach Anspruch 1 oder 2, dadurch gekennzeichnet, daß das Gewichtsverhältnis von Träger zu Pyrethroid-Insektizid im Bereich von 1:1 bis 50:1 liegt.

4. Suspension nach einem der vorausgehenden Ansprüche, dadurch gekennzeichnet, daß der mittlere Durchmesser (Volumen) des Trägers im Bereich von 0,5 bis 24 $\mu$m liegt.

5. Suspension nach einem der vorausgehenden Ansprüche, dadurch gekennzeichnet, daß das Dispergiermittel in einer Konzentration im Bereich von 10 bis 50 g/l bezogen auf die Suspension vorhanden ist.

6. Suspension nach einem der vorausgehenden Ansprüche, dadurch gekennzeichnet, daß das Struktur-gebende Mittel ein wasserlösliches polymeres Material ist.

7. Suspension nach einem der vorausgehenden Ansprüche, dadurch gekennzeichnet, daß das Struktur-gebende Mittel in einer Konzentration im Bereich von 1 bis 10 g/l bezogen auf die Suspension vorhanden ist.

8. Verfahren zur Herstellung einer pestiziden Suspension auf der Grundlage von Wasser, dadurch gekennzeichnet, daß

(a) das Pyrethroid-Insektizid mit einem Emulgiermittel homogenisiert wird, wobei das Gewichtsverhältnis von Insektizid zu Emulgiermittel im Bereich von 1:1 bis 10:1 liegt;

(b) eine Aufschlämmung des homogenisierten Gemisches aus Pyrethroid-Insektizid und Emulgiermittel zusammen mit dem Träger, Wasser und dem Dispergiermittel gebildet wird; und

(c) eine stabile (strukturierte) Suspension gebildet wird durch Zugabe eines Strukturbildenden Mittels zu der Aufschlämmung.

9. Verfahren zur Herstellung eine pestiziden Suspension auf der Grundlage von Wasser, dadurch gekennzeichnet, daß

(a) das Pyrethroid-Insektizid mit einem Emulgiermittel homogenisiert wird, wobei das Gewichtsverhältnis von Insektizid zu Emulgiermittel im Bereich von 1:1 bis 10:1 liegt;

(b) eine Aufschlämmung des homogenisierten Gemisches von Pyrethroid-Insektizid und Emulgiermittel zusammen mit dem Träger, Wasser und dem Dispergiermittel gebildet wird;

(c) die Aufschlämmung unter Bildung einer Suspension der erforderlichen Teilchengröße naß gemahlen wird und

(d) eine stabile Suspension gebildet wird durch Zugabe eines Struktur-bildenden Mittels zu der naß vermahlenen Aufschlämmung.

10. Verfahren nach Anspruch 9, dadurch gekennzeichnet, daß das Naßvermahlen bei einer Temperatur unterhalb 60°C durchgeführt wird.

11. Verfahren nach einem der Ansprüche 8 bis 10, dadurch gekennzeichnet, daß das Struktur-gebende Mittel als Lösung in Wasser, gegebenenfalls zusammen mit einem Frostschutzmittel oder einem Bakterizid, zugesetzt wird.

12. Verfahren nach einem der Ansprüche 8 bis 11, dadurch gekennzeichnet, daß ein anti-Schaummittel zu der Aufschlämmung oder während deren Herstellung zugegeben wird.

## Revendications

1. Une suspension pesticide à base d'eau caractérisée en ce qu'elle comprend

(a) un insecticide pyréthroïde liquide ou semi-solide qui est distribué et/ou absorbé sur un véhicule solide finement divisé dans un rapport en poids du véhicule à l'insecticide pyréthroïde compris entre 1:1 et 100:1.

(b) de l'eau dans laquelle est suspendu le véhicule ayant l'insecticide puréthroïde distribué et/ou adsorbé sur lui;

(c) un agent dispersant du type non-ionique et/ou du type anionique pour disperser le véhicule solide finement divisé dans l'eau, l'agent dispersant étant présent à une concentration de 5 à 200 grammes par litre de la suspension; et

(d) un agent structurant à une concentration 0,1 à 30,0 grammes par litre de suspension pour stabiliser la suspension et empêcher sensiblement la sédimentation du véhicule finement divisé; l'insecticide pyréthroïde étant présent à une concentration de 1 à 250 grammes par litre de la suspension.

2. Une suspension selon la revendication 1, caractérisée en ce que l'insecticide pyréthroïde liquide ou semisolide est un 3-phénoxybenzyl ester, un alpha - cyano - 3 - phénoxybenzyl ester, un alpha - cyano - 2 - phénoxypyridin - 6 - ylméthyl ester ou un alpha - cyano - 3 - (4 - halophénoxy) - benzyl ester d'un acide cyclopropanecarboxylique substitué, d'un acid phénylacétique substitué ou d'une acide phénylaminoacétique substitué.

3. Une suspension selon l'une des revendications 1 et 2, caractérisée en ce que le rapport en poids du véhicule à l'insecticide pyréthroïde est compris entre 1:1 et 50:1.

4. Une suspension selon l'une quelconque des revendications précédentes, caractérisée en ce que le diamètre médian en volume du véhicule est compris entre 0,5 et 24 micromètres.

5. Une suspension selon l'une quelconque des revendications précédents, caractérisée en ce que l'agent dispersant est présent à une concentration comprise entre 10 et 50 grammes par litre de suspension.

6. Une suspension selon l'une quelconque des revendication précédentes, caractérisée en ce que l'agent structurant est une matière polymère soluble dans l'eau.

7. Une suspension selon l'une quelconque des revendications précédentes, caractérisée en ce que l'agent structurant est présent à une concentration comprise entre 1 et 10 grammes par litre de suspension.

8. Un procédé de préparation d'une suspension pesticide à base d'eau, caractérisé en ce que:

(a) on homogénéise l'insecticide pyréthroïde avec un agent émulsionnant, le rapport en poids de l'insecticide à l'agent émulsionnant étant compris entre 1:1 et 10:1;

(b) on forme une bouillie du mélange homogénéisé de l'insecticide pyréthroïde et de l'argent émulsionnant avec en même temps le véhicule, de l'eau et l'agent dispersant; et

(c) on forme une suspension structurée en ajoutant à la bouillie un agent structurant.

9. Un procédé de préparation d'une suspension pesticide à base d'eau, caractérisé en ce que:

(a) on homogénéise l'insecticide pyréthroïde avec un agent émulsionnant, le rapport en poids de l'insecticide à l'agent émulsionnant étant compris entre 1:1 et 10;1;

(b) on forme une bouillee du mélange homogénéisé de l'insecticide pyréthroïde et de l'argent émulsionnant avec en même temps le véhicule, de l'eau et l'agent dispersant;

(c) on broie la bouillie par voie humide de manière à produire une suspension de la grosseur requise de particules; et

(d) on forme une suspension structurée en ajoutant à la bouille broyée par voie humide un agent structurant.

10. Un procédé selon la revendication 9, caractérisé en ce que le broyage par voie humide est effectué à une température inférieure à 60°C.

11. Un procédé selon l'une quelconque des revendications 8 à 10 caractérisé en ce que l'agent structurant est ajouté sous la forme d'une solution dans l'eau éventuellement en même temps qu'un antigel ou un bactéricide.

12. Un procédé selon l'une quelconque des revendications 8 à 11, caractérisé en ce qu'un additif antimousse est ajouté à la bouillie ou durant sa formation.